# EUROPEAN PATENT SPECIFICATION

(11) **EP 0 675 001 B1**
(45) Date of publication and mention of the grant of the patent: **16.06.1999**
(21) Application number: 94302249.1
(22) Date of filing: 29.03.1994
(51) Int. Cl.: B41M 5/24, B41M 1/30, C08K 3/00, C08K 3/38

(54) **Resin compositions for laser marking**
Harzzusammensetzungen für Laserbeschriftung
Compositions à base de résines pour marquage par laser

(43) Date of publication of application: 04.10.1995
(73) Proprietor: GE PLASTICS JAPAN LIMITED, Chuo-Ku, Tokyo (JP)
(72) Inventor: Kato, Hideki, Utsumoniya City, Tochigi Prefecture (JP)
(74) Representative: Szary, Anne Catherine, Dr.

(56) References cited:
- EP-A- 0 413 167
- EP-A- 0 607 597
- JP-A- 6 048 042
- US-A- 5 063 137
- PATENT ABSTRACTS OF JAPAN vol. 11, no. 242 (C-438) 7 August 1987 & JP-A-62 050 360 (SUMITOMO BAKELITE CO LTD) 5 March 1987
- DATABASE WPI Section Ch, Week 8541, Derwent Publications Ltd., London, GB; Class G06, AN 85-252684 & JP-A-60 166 488 (SOMAR MFG KK) 29 August 1985
- DATABASE WPI Section Ch, Week 9424, Derwent Publications Ltd., London, GB; Class A23, AN 94-197319 & JP-A-6 136 273 (NIPPON GE PLASTICS KK) 17 May 1994

## Description

This invention relates to resin compositions for laser marking

Methods for marking thermoplastic resins include blowing on ink by an ink jet technique, screen printing, ink writing techniques or the like. These methods generally encounter such problems as resistance to thermal shock (peeling of the ink surface), weather resistance (discoloration of the ink) and abrasion resistance (abrasion of the ink surface). In the case of ink jet techniques and screen printing, ink is applied to the resin surface, dried and thereby deposited, but because the nature of ink and resin differs, it is difficult to create a state of complete adhesion; attention must be paid to this point when it comes to the selection of ink. In ink embedding techniques, either depressions are created beforehand during molding at the resin marking places, or engraving is carried out after molding, subsequent to which marking is achieved by embedding ink or paint at the engraved places. However, in methods where depressions are created during molding, because the marking shape is limited by the mold, it is difficult to change the marking shape for each product; on the other hand, in methods where engraving is carried out, an inordinate amount of time is devoted to engraving. In addition, because the ink or paint is embedded afterward, this makes it necessary to remove excess ink or paint. Hence, the steps become complex, making such techniques unsuitable for marking onto mass-produced product.

For these reasons, many laser marking methods, which are characterized by being non-contact, having a rapid marking speed, automation and easy process control, have recently come into use within industry. Laser marking methods are methods of leaving marks, bar codes or images on the surface of metal, ceramic and macromolecular organic materials using laser light.

Examples of laser marking methods include the following:
(1) methods where marking is carried out by utilizing changes in the state of the surface (roughening, the formation of depressions) due to etching;
(2) marking methods that utilize the decoloration and discoloration of pigment, dyes or the like at the place of irradiation, as cited in Japanese Published Unexamined Patent Application [Kokai] Nos. 56-144,995 (1981), 60-155,493 (1985), 60-166,488 (1985), 60-172,590 (1985), 60-47,065 (1985), 62-50,360 (1987) and 3-10,884 (1991); and
(3) marking methods that utilize the changes in the state of the surface (protrusions) due to foaming of the resin material, as cited in Japanese Published Examined Patent Application [Kokoku] No. 2-47,314 (1990).
Here, in markings that utilize the change in state in (3), unpolymerized monomer, decomposition products and the like that are present within the portion of the resin to which considerable heat has been applied by laser light volatilize, resulting in foaming of that area. Hence, marking is carried out because the light scatters and reflects, and projections from on the resin.

However, in methods where marking is carried out by roughening or forming depressions in the surface (method 1), the boundary between laser light-irradiated and unirradiated areas is not distinct. Although use is sometimes made of a method whereby different types of resins are formed into a laminar structure and just the resin in the surface layer is scraped off, the production steps in such a method are extremely complex; in addition, the layer to which etching occurs also presents a problem. In the case of marking by means of the decoloration or discoloration of pigments, dyes or the like (method 2), the types and colors of the resins used are limited by the types of pigments and dyes. Because pigments, dyes and the like are readily decolored or discolored by heat, the discolored region spreads and the contours of the letters or the like become indistinct. In methods of marking that utilize changes in state due to foaming (method 3), it is necessary to minutely investigate the optimal conditions for various resins. However, given that the use of a resin by itself is uncommon in cases where marking is carried out on the surface of a resin composition consisting of several ingredients, for example, it is necessary to minutely investigate the suitable conditions for the various components. Because some resins do not readily foam, the resins on which this approach can be used are limited.

Hence the purpose of this invention is to provide resin compositions to which distinct, stable markings can easily be applied in a short time.

The inventors discovered that when specific compounds are included in the thermoplastic resin, resin compositions can be obtained to which distinct, stable markings can easily be applied in a short time.

The present invention provides a resin composition for laser marking, consisting of A) a thermoplastic resin; and B) an inorganic compound, characterized in that the inorganic compound (B) releases at least part of its water at a temperature of 200-1000°C and excludes aluminium hydroxide and magnesium hydroxide, said composition optionally containing:
C) carbon black;
D) a flame retardant; and
E) a reinforcing agent selected from glass fibres, carbon fibres and aramid fibres.

There is no particular restriction on the thermoplastic resins employed in this invention, it being possible to use various known thermoplastic resins. Examples that may be cited include polyesters such as polyethylene terephthalate (PET), polybutylene terephthalate (PBT) and polycyclohexene terephthalate (PCT); other examples include polyphenylene oxide (PPO), polycarbonate (PC), polyether imide (PEI), polystyrenes (PS) such as high-impact polystyrene (HIPS), polyethylene (PE), polypropylene (PP), polyamide (PA), polyvinyl resins (PVC), polyacetal (POM), fluoroplastics such as polytetrafluoroethylene, acrylic resins, polysulfones, polyphenylene sulfides (PPS), and methyl pentene resins. However, the possibilities are not limited to these. Various types of thermoplastic resin alloys can be used, such as alloys of PPO and PS resins. The use of polyesters, PPO, PC, PEI or resin alloys including these is preferable.

An important factor in this invention is the use, as one component of the resin composition, of an inorganic compound that releases part of its water at a temperature of 200-1000°C. By means of this, it becomes possible to mark resins (compositions) that could not be marked by the method cited in Kokoku No. 2-47,314 (1990). Moreover, because this has no influence on areas that have not been irradiated by laser light, these markings are very distinct. According to research conducted by the inventors, as cited in Kokoku No. 2-47,314 (1990), from the standpoint of foaming the laser-irradiated areas, when a compound that is normally employed as a blowing agent is used, such as an aliphatic hydrocarbon, chlorinated or fluorinated compounds thereof, or a bicarbonate, foaming arises at the time of resin composition production, as a result of which even regions not irradiated with laser light foam; this causes the markings to become indistinct, which is undesirable. Also, even when a compound that does not release water is used, such as anhydrous zinc borate, there is virtually no improvement in the distinctness of the markings. That is, only resin compositions according to this invention which contain inorganic compounds that release at least part of their water at a temperature of 200-1000°C provide distinct markings by means of laser light irradiation. This was entirely unanticipated.

Inorganic compounds which release at least part of their water at a temperature of 200-1000°C (hereinafter referred to as "water-releasing inorganic compounds") are known in themselves, and are cited in *Kagaku Benran Kiso-hen** (compiled and edited by Maruzen Co. and Chemical Society of Japan). Examples that may be cited include inorganic compounds containing water of crystallization, such as zinc borate hydrates (e.g., 2ZnO·3B₂O₃·3.5H₂O and ZnB₄O₇·4H₂O) and also Ce₂(SO₄)₃·8H₂O, MgSO₄·H₂O, LiI·3H₂O and Ba(OH)₂·8H₂O; other examples that may be cited include compounds that decompose at the above-indicated temperatures and release water, such as, Ca(OH)₂. However, the possibilities are not limited to these alone. In cases where coloration of the resin composition does not present a problem, colored compounds such as CoSO₄·7H₂O and CrPO₄·6H₂O can be used. It is also possible to combine and use together two or more water-releasing inorganic compounds. It is preferable that these water-releasing inorganic compounds release virtually no water at temperatures below 200°C. The use of compounds that release quite a bit of water at temperatures below 200°C has undesirable effects; for example, the water may be released during production of the resin composition, making satisfactory production impossible, or foaming may extend to a region that has not been laser-irradiated, causing marking to become indistinct. When compounds that do not release water even at high temperatures above 1000°C are used, there is virtually no improvement in the distinctness of the markings compared with cases when inorganic compounds are used. It is more preferable to use compounds that release water only within a temperature range of about 300-600°C. Preferable examples that may be cited include zinc borate hydrate, and in particular 2ZnO·3B₂O₃·3.5H₂O. These water-releasing inorganic compounds are preferably used in an amount of 0.1-50 parts by weight, and even more preferably 1-10 parts by weight, per 100 parts by weight of thermoplastic resin.

The resin compositions of this invention may include carbon black as an optional ingredient. By including carbon black together with water-releasing inorganic compounds, even more distinct markings can be imparted to the resin composition. In this invention, the carbon black need only consist essentially of carbon, it being possible to use various types of known carbon black. Carbon black is generally prepared by a furnace process, a contact process or an impact process; examples that may be cited of the starting materials include creosote oil, heavy fuel oil, ethylene bottoms, natural gas, acetylene gas, naphthalene, anthracene, petroleum, petroleum gas, and pitch oil. Depending on the production method and the raw material used, these carbon blacks are called furnace black, lamp black, thermal black, acetylene black, German furnace black, channel black, roller black, German naphthalene black, gas black, oil black, etc. Examples of commercial carbon blacks that may be cited include FW18 made by Degussa, Inc., #45 made by Mitsubishi Kasei Corp., and #8500 made by Tokai Carbon Co. Two or more carbon blacks may be used. The carbon black is preferably used in an amount of about 0.01-3 parts by weight, and even more preferably 0.05-1.5 parts by weight, per 100 parts by weight of the thermoplastic resin.

The resin compositions for laser marking according to this invention may also include various fire retardants and fire-retarding aids. There is no particular restriction on the fire retardants and fire-retarding aids. Preferable examples that may be cited include halogen-based fire retardants such as brominated imides, brominated polycarbonates, brominated epoxy compounds, brominated bisphenol A (Br-BPA) and brominated polyphenylene oxide; phosphorus-based fire retardants such as triphenyl phosphate (TPP); and fire-retarding aids such as Sb₂O₃, although the possibilities are not limited to these alone. The amount in which these fire retardants and fire-retarding aids are used may be set at any level according to the type of thermoplastic resin and the target resin composition. In general, however, it is preferable that the amount of the fire retardant be set at about 5-30 parts by weight and the amount of the fire-retarding aid be set at about 0-15 parts by weight, per 100 parts by weight of the thermoplastic resin.

It is also desirable that a reinforcing agent such as glass fibers, carbon fibers or aramid fibers also be included in the resin composition for laser marking according to this invention. The amount in which the reinforcing agents are used can be set as desired depending on the type of thermoplastic resin and the target resin composition, although it is preferable to use them in an amount of about 0-100 parts by weight, and most preferably 0-50 parts by weight, per 100 parts by weight of the thermoplastic resin.

Resin compositions for laser marking according to this invention can be obtained by mixing the various above ingredients. There is no particular restriction on the mixing method, it being possible to use any desired mixing sequence for the various ingredients. For example, the optional ingredients other than the water-releasing inorganic compound and the carbon black can be added and mixed to the thermoplastic resin in the molten state, or the optional ingredients other than the water-releasing inorganic compound and the carbon black can be added and kneaded into a solution of the thermoplastic resin. More specific examples that may be cited include kneading methods whereby the water-releasing inorganic compound and the optional ingredients are separately or simultaneously added directly to the thermoplastic resin in a molten state; melt kneading methods whereby pellets of thermoplastic resin are fed to a single-screw or twin-screw extruder together with the water-releasing inorganic compound and the optional ingredients; and stirring methods whereby the thermoplastic resin is dissolved in a suitable solvent (e.g., methylene chloride, chloroform, toluene, tetrahydrofuran) and the water-releasing inorganic compound and the optional ingredients are separately or simultaneously added and stirred into this solution. Of those, one preferable embodiment of a melt kneading method that may be cited consists of carrying out extrusion with a single-screw or twin-screw extruder (D = 30-90 mm) at a temperature appropriate to the thermoplastic resin used (for example, the temperature can be set at approx. 260°C for PBT resins, approx. 280°C for PCT resins, approx. 280°C for mixtures of PPO resins and PS resins, approx. 270°C for PC resins, and approx. 330°C for PEI resins, although the possibilities are not limited to these), and the resin compositions of this invention can thus be obtained in the form of pellets or the like. Nor is there any particular restriction on the method of preparing molded pieces from the resin compositions of this invention; examples of known methods that may be used include injection molding extrusion molding, blow molding, and vacuum molding. There is no particular restriction on the molding conditions, it being possible to carry out molding at any pressure and temperature that accords with the ingredients used, the target molded pieces and the molding process (for example, approx. 280°C when injection molding PCT resins, approx. 260°C when injection molding mixtures of PPO resins and PS resins, approx. 260°C when injection molding mixtures of PPO resins and PS resins; approx. 270°C when injection molding PC resins; and approx. 320°C when injection molding PEI resins). Selection of a kneading method and a molding process that accords with the ingredients used and the target molded products should be easy for those acquainted with the art.

Laser marking can be carried out by any method on the resin compositions of this invention. Examples that may be cited include carbon dioxide gas lasers and YAG lasers, but the possibilities are not limited to these. Distinct marking can be carried out by means of laser light irradiation on the resin compositions according to the present invention. In marking onto the resin compositions of this invention, unlike with marking that involves the decoloration or discoloration of dyes or pigments, the influence of the laser light does not extend outside of the irradiated area. For this reason, it is even possible to draw line lines having a width of about 10 µm. In addition, marking can be carried out rapidly; it is possible, for example, to draw a line having a width of about 1.0 mm at a speed of at least 200 mm/sec. Resin compositions of various formulations can be included in this invention, but there is no need to minutely investigate the optimal conditions for irradiation with respect to individual compositions; moreover, there is no restriction on the resins used as the ingredients. The resin compositions of this invention also have the advantage of being able to simplify the production process.

The reason why the resin compositions according to this invention are distinctly marked by laser light are not clear, but this is thought to involve the separation and vaporization of water from the water-releasing inorganic compound in the portion of the resin composition that has been irradiated with laser light, the resulting formation of protrusions and depressions in the resin composition of that portion, and the generation of light scattering and reflection. More distinct marking on account of the presence of carbon black probably increases the visual effects at the same time that the carbon black increases the heat conversion efficiency of the laser light energy.

The present invention shall now be described in greater detail by means of examples thereof, although it shall be understood that the invention is in no way limited by the examples given.

### Examples

The ingredients shown in Tables 1-3 were selected from the following ingredients, and extrusion carried out with an extruder so as to give pellets. Molded pieces measuring 50x50x3mm were injection molded using these pellets.
(A) One hundred parts by weight of one of the following resins:
   (A-a) PBT (Valox™, made by GE Plastics Japan);
   (A-b) PCT (Valox™, made by GE Plastics Japan);
   (A-c) A mixture of PPO and PS resin (Noryl™, made by GE Plastics Japan);
   (A-d) PC (Lexan™, made by GE Plastics Japan);
   (A-e) PEI (Ultem™, made by GE Plastics Japan).
(B) Water-Releasing Inorganic Compound: The amounts (parts by weight) indicated in Tables 1-3 of zinc borate hydrate (ZB2335™, made by Sanyo Chemical Industries; 2ZnO·3B₂O₃·3.5H₂O).
(B') Inorganic Compound that Does Not Release Water: The amounts (parts by weight) indicated in Tables 1-3 of anhydrous zinc borate (obtained by heating the zinc borate hydrate in B above at 600°C).
(C) Carbon Black (FW18™, made by Degussa, Inc.): Used in the amounts (parts by weight) indicated in Tables 1-3.
(D) Fire retardant: One of the following:
   (D-a) 15 parts by weight of brominated imide (BT-93™, made by Ethyl Corporation);
   (D-b) 15 parts by weight of brominated PC (ML4365™, made by GE Plastics Japan);
   (D-c) 15 parts by weight of brominated PS (Pyrocheck™, made by Fero Kagaku);
   (D-d) 15 parts by weight of brominated epoxy compound (SR-T5000™, made by Sakamoto Yakuhin);
   (D-e) 15 parts by weight of brominated BPA oligomer (FR-53™, made by Mitsubishi Gas);
   (D-f) 12 parts by weight of brominated BPA oligomer (FR-53) and 5 parts by weight of Sb₂O₃; or
   (D-g) 12 parts by weight of TPP.
(E) The amount (parts by weight) of class fibers indicated in Tables 1-3.

Marking was carried out on the surface of the molded pieces thus obtained using a CO₂ gas laser or a YAG laser. The marking conditions were as follows:
- CO₂ gas laser:: 6-24 J/cm²
- YAG laser:: Speed of movement, 100-400 mm/s
Byte size, 10-140µm
The distinctness of the marking was visually evaluated. The results are presented in Tables 1-3. The symbols in the tables have the following meanings: ⓞ: very distinct; ○: distinct; △: somewhat indistinct; X: indistinct

**Table 1**

| Ex. | Formulation | | | | | | Results | |
|---|---|---|---|---|---|---|---|---|
| | (A) | (B) | (B') | (C) | (D) | (E) | CO₂ | YAG |
| 1 | (A-a) | -- | -- | -- | -- | -- | X | △ |
| 2 | (A-a) | -- | -- | 0.1 | -- | -- | ○ | ○ |
| 3 | (A-a) | 2 | -- | 0.1 | -- | -- | ○ | ⓞ |
| 4 | (A-a) | 5 | -- | 0.1 | -- | -- | ⓞ | ⓞ |
| 5 | (A-a) | 10 | -- | 0.1 | -- | -- | ⓞ | ⓞ |
| 6 | (A-a) | -- | 5 | 0.1 | -- | -- | ○ | ○ |
| 7 | (A-a) | -- | -- | -- | (D-a) | 30 | X | X |
| 8 | (A-a) | -- | -- | 0.1 | (D-a) | 30 | X | △ |
| 9 | (A-a) | 5 | -- | 0.1 | (D-a) | 30 | ⓞ | ⓞ |
| 10 | (A-a) | -- | 5 | 0.1 | (D-a) | 30 | X | △ |
| 11 | (A-a) | -- | -- | -- | (D-b) | 30 | X | X |
| 12 | (A-a) | -- | -- | 0.1 | (D-b) | 30 | X | △ |
| 13 | (A-a) | 5 | -- | 0.1 | (D-b) | 30 | ⓞ | ⓞ |
| 14 | (A-a) | -- | -- | -- | (D-c) | 30 | X | X |
| 15 | (A-a) | -- | -- | 0.1 | (D-c) | 30 | X | X |
| 16 | (A-a) | 5 | -- | 0.1 | (D-c) | 30 | ⓞ | ⓞ |
| 17 | (A-a) | -- | -- | -- | (D-d) | 30 | X | X |
| 18 | (A-a) | -- | -- | 0.1 | (D-d) | 30 | X | △ |
| 19 | (A-a) | 5 | -- | 0.1 | (D-d) | 30 | ⓞ | ⓞ |
| 20 | (A-a) | -- | -- | -- | (D-e) | 30 | X | X |
| 21 | (A-a) | -- | -- | 0.1 | (D-e) | 30 | X | △ |
| 22 | (A-a) | 5 | -- | 0.1 | (D-e) | 30 | ⓞ | ⓞ |
| 23 | (A-a) | -- | -- | -- | (D-f) | 30 | X | X |
| 24 | (A-a) | -- | -- | 0.1 | (D-f) | 30 | X | X |
| 25 | (A-a) | 5 | -- | 0.1 | (D-f) | 30 | ⓞ | ⓞ |

**Table 2**

| Ex. | Formulation | | | | | | Results | |
|---|---|---|---|---|---|---|---|---|
| | (A) | (B) | (B') | (C) | (D) | (E) | CO₂ | YAG |
| 26 | (A-b) | -- | -- | -- | -- | -- | X | X |
| 27 | (A-b) | -- | -- | 0.1 | -- | -- | ○ | ○ |
| 28 | (A-b) | 5 | -- | 0.1 | -- | -- | ⓞ | ⓞ |
| 29 | (A-b) | -- | 5 | 0.1 | -- | -- | ○ | ○ |
| 30 | (A-b) | -- | -- | -- | (D-c) | 30 | X | X |
| 31 | (A-b) | -- | -- | 0.1 | (D-c) | 30 | X | △ |
| 32 | (A-b) | 5 | -- | 0.1 | (D-c) | 30 | ⓞ | ⓞ |

**Table 3**

| Ex. | Formulation | | | | | Results | |
|---|---|---|---|---|---|---|---|
| | (A) | (B) | (B') | (C) | (D) | CO₂ | YAG |
| 33 | (A-c) | -- | -- | -- | -- | △ | ○ |
| 34 | (A-c) | -- | -- | 0.1 | -- | ○ | ○ |
| 35 | (A-c) | 2 | -- | 0.1 | -- | ⓞ | ⓞ |
| 36 | (A-c) | 5 | -- | 0.1 | -- | ⓞ | ⓞ |
| 37 | (A-c) | 10 | -- | 0.1 | -- | ⓞ | ⓞ |
| 38 | (A-c) | -- | 5 | 0.1 | -- | ○ | ○ |
| 39 | (A-c) | -- | -- | -- | (D-g) | X | X |
| 40 | (A-c) | -- | -- | 0.1 | (D-g) | X | △ |
| 41 | (A-c) | 5 | -- | 0.1 | (D-g) | ⓞ | ⓞ |
| 42 | (A-c) | -- | 5 | 0.1 | (D-g) | X | △ |
| 43 | (A-d) | -- | -- | -- | -- | △ | ○ |
| 44 | (A-d) | -- | -- | 0.1 | -- | ○ | ○ |
| 45 | (A-d) | 5 | -- | 0.1 | -- | ⓞ | ⓞ |
| 46 | (A-d) | -- | 5 | 0.1 | -- | ○ | ○ |
| 47 | (A-d) | -- | -- | -- | (D-d) | △ | △ |
| 48 | (A-d) | -- | -- | 0.1 | (D-d) | X | △ |
| 49 | (A-d) | 5 | -- | 0.1 | (D-d) | ⓞ | ⓞ |
| 50 | (A-d) | -- | -- | -- | (D-e) | △ | △ |
| 51 | (A-d) | -- | -- | 0.1 | (D-e) | X | △ |
| 52 | (A-d) | 5 | -- | 0.1 | (D-e) | ⓞ | ⓞ |
| 53 | (A-e) | -- | -- | -- | -- | X | △ |
| 54 | (A-e) | -- | -- | 0.1 | -- | X | △ |
| 55 | (A-e) | 5 | -- | 0.1 | -- | ⓞ | ⓞ |
| 56 | (A-e) | | 5 | 0.1 | -- | ○ | ○ |

From the above, it is apparent that, according to this invention, compositions which contain water-releasing inorganic compounds achieve more distinct markings by laser light irradiation than compositions which do not contain such compounds. Moreover, it also is clear that, while very distinct marking cannot be obtained in compositions which contain inorganic compounds that do not release water, distinct markings can be obtained in compositions which, in accordance with this invention, contain water-releasing inorganic compounds.

Distinct and stable markings can be obtained by irradiating the resin compositions of this invention with laser light. In the resin compositions of this invention, laser light does not have an influence outside of the area of irradiation. Hence, it is possible to draw fine lines having a width of about 10 µm. Resin compositions of various formulations are encompassed by this invention, but there is no longer any need to minutely investigate the optimal conditions for irradiation with respect to individual compositions. The resin compositions according to this invention also have the advantage that the production process is simplified.

## Claims

1. A resin composition for laser marking, consisting of A) a thermoplastic resin; and B) an inorganic compound;
characterized in that the inorganic compound (B) releases at least part of its water at a temperature of 200-1000°C and excludes aluminium hydroxide and magnesium hydroxide, said composition optionally containing:
C) carbon black;
D) a flame retardant; and
E) a reinforcing agent selected from glass fibres, carbon fibres and aramid fibres.

2. A resin composition according to claim 1 wherein the inorganic compound releases part of its water at a temperature of from 300-600°C.

3. A resin composition according to claim 1 wherein the inorganic compound is a zinc borate hydrate, Ce₂(SO₄)₃.8H₂0, MgSO₄.H₂0, LiI.3H₂0, Ba(OH)₂.8H₂O, Ca(OH)₂, CoSO₄.7H₂0 and CrPO₄.6H₂0 and mixtures thereof.

4. A resin composition for laser marking according to any preceding claim, wherein the inorganic compound is a zinc borate hydrate.

5. A resin composition according to any preceding claim wherein the reinforcing agent is glass fibre.

## Patentansprüche

1. Harzzusammensetzung für Laserbeschriftung, bestehend aus A) einem thermoplastischen Harz; und B) einer anorganischen Verbindung;
dadurch gekennzeichnet, daß die anorganische Verbindung B) wenigstens einen Teil ihres Wassers bei einer Temperatur von 200 - 1000 °C freisetzt, ausgeschlossen Aluminiumhydroxid und Magnesiumhydroxid, wobei die Zusammensetzung ggf. enthält:
C) Ruß;
D) einen Flammverzögerer; und
E) ein verstärkendes Mittel ausgewählt aus Glasfasern, Kohlenstoffasern und Aramidfasern.

2. Harzzusammensetzung nach Anspruch 1, dadurch gekennzeichnet, daß die anorganischen Verbindung einen Teil ihres Wassers bei einer Temperatur von 300-600 °C freisetzt.

3. Harzzusammensetzung nach Anspruch 1, dadurch gekennzeichnet, daß die anorganische Verbindung ein Zinkborathydrat ist, Ce₂(SO₄)₃ . 8H₂O, MgSO₄ . H₂O, LiJ . 3H₂O, Ba(OH)₂ . 8H₂O, Ca(OH)₂, CoSO₄ . 7H₂O und CrPO₄ . 6H₂O und Mischungen daraus.

4. Harzzusammensetzung für Laserbeschriftung gemäß einem der vorhergehenden Ansprüche, dadurch gekennzeichnet, daß die anorganische Verbindung Zinkborathydrat ist.

5. Harzzusammensetzung nach einem der vorhergehenden Ansprüche, dadurch gekennzeichnet, daß das verstärkende Mittel Glasfaser ist.

## Revendications

1. Composition à base de résine pour marquage au laser, qui est constituée de A) une résine thermoplastique et B) un composé minéral et qui contient éventuellement C) du noir de carbone, D) un agent retardant l'inflammation et E) un agent de renforcement choisi parmi les fibres de verre, les fibres de carbone et les fibres d'aramide, **caractérisée** en ce que le composé minéral (B) libère au moins une partie de son eau à des températures situées dans l'intervalle allant de 200 à 1000 °C et ne contient pas d'hydroxyde d'aluminium ou d'hydroxyde de magnésium.

2. Composition à base de résine selon la revendication 1, pour laquelle le composé minéral libère une partie de son eau à des températures situées dans l'intervalle allant de 300 à 600 °C.

3. Composition à base de résine selon la revendication 1, dans laquelle le composé minéral est un hydrate de borate de zinc, Ce₂(SO₄)₃.8H₂O, MgSO₄.H₂O, LiI.3H₂O, Ba(OH)₂.8H₂O, Ca(OH)₂, CoSO₄.7H₂O, CrPO₄.6H₂O ou un mélange des composés précédents.

4. Composition à base de résine pour marquage au laser selon l'une quelconque des revendications précédentes, dans laquelle le composé minéral est un hydrate de borate de zinc.

5. Composition à base de résine selon l'une quelconque des revendications précédentes, dans laquelle l'agent de renforcement est constitué de fibres de verre.
